# EUROPEAN PATENT APPLICATION

(11) **EP 0 577 351 A2**
(43) Date of publication of application: **05.01.1994**
(21) Application number: 93304996.7
(22) Date of filing: 25.06.1993
(51) Int. Cl.: H04N 7/08

(54) **Television signal processing apparatus**

(30) Priority: 30.06.1992 JP 172297/92
(71) Applicant: MATSUSHITA ELECTRIC INDUSTRIAL CO., LTD., Kadoma-shi, Osaka 571 (JP)
(72) Inventor: Kageyama, Sadashi, Hirakata-shi, Osaka-fu 573 (JP); Uwabata, Hideyo, Hirakata-shi, Osaka-fu 573 (JP); Hayashi, Kenichiro, Toyonaka-shi, Osaka-fu 560 (JP); Bowser, Todd, Itami-shi, Hyogo-ken 664 (JP); Yasumoto, Yoshio, Nara-shi, Nara-ken 631 (JP)
(74) Representative: Crawford, Andrew Birkby

(57) **Abstract**

A television signal processing system for multiplexing and transmitting additional information to the existing television broadcasting within the same transmission band as in the existing television broadcasting, assigns plural data to the amplitude or phase information in the frequency domain at the transmission side, and adjusts the amplitude of the frequency domain, then converts it into a signal in the time domain by inverse fast Fourier transform. The transformed signal is modulated by quadrature modulation of the video carrier, and limited in band by inverse Nyquist filter, and transmitted. At the reception side, the signal demodulated in quadrature by the video carrier is converted into information in the frequency domain, and the transmitted data is reproduced from that information.

## Description

### BACKGROUND OF THE INVENTION

### 1. Field of the Invention

The present invention relates to a television signal processing apparatus for multiplex transmission of the existing television signal and additional information within the same transmission band as the existing television broad-casting.

### 2. Description of the Prior Art

As an existing television system, for example, the NTSC (National Television System Committee) system is specified by the conditions of 525 scanning lines, 2:1 interlace scanning, horizontal band width of 4.2 MHz for luminance signal, and aspect ratio (ratio of lateral and vertical size of screen) of 4:3. Lately, the television signal processing method capable of multiplexing and transmitting additional information while keeping compatibility with the existing television broadcasting has been proposed. For example, as disclosed in United States Patent No. 4,882,614, the quadrature modulation system is proposed. In this system, a carrier which is the same in frequency as and orthogonal in the phase relation to the video carrier is amplitude-modulated by additional information, limited in band so as to be in vestigial side band, synthesized with the video carrier amplitude-modulated by video information, and transmitted.

A multiplex transmission system of digital data by the quadrature modulation system compatible with the existing television broadcasting is proposed by Tsutomu Noda in "Channel Coding of Digital Data for Quadrature Modulation of Television Carrier", ITEJ Technical Report, Vol. 16, No. 26, pp. 25-30, BCS '92-16, March 1992. At the transmission side, a signal from a video signal source such as a video camera is converted, for example, into a video signal of NTSC system. By this video signal, the video carrier is amplitude-modulated, and limited in band by a filter to be in vestigial side band. On the other hand, a data having the sound signal or the like converted into a PCM digital data is coded by partial response such, for example, as the di-code coding to be suited to transmission. By the coded signal, a carrier whose phase is orthogonal to that of the video carrier is amplitude-modulated with carrier suppression. The modulated signal is limited in band by an inverse Nyquist filter, and is combined with the signal limited in band to the vestigial side band. The combined signal is transmitted through an antenna or the like. The di-code coding is a known art, which produces tertiary data, with the DC components suppressed.

Explained next is the prior art of the television signal processing at the reception side for processing the signal multiplex-transmitted by such quadrature modulation system. The television signal received by an antenna is converted in frequency by a tuner to intermediate frequency for demodulation. The tuner output is limited in band by a Nyquist filter possessing known characteristics. The output of the Nyquist filter is fed into a video synchronous detector to be synchronously detected by a regenerated carrier to obtain a video signal in base band. In a video signal processing circuit, the demodulated video signal is processed reversely to the processes of the transmission side, including separation into luminance signal and chrominance signal. As a result, three color signals such as R, G, B are obtained, and fed to a display device. Furthermore, the following processing is done in order to demodulate the multiplexed additional information. The tuner output is limited in band by a band pass filter in order to remove influences of the video signal, and demodulated by synchronous detection. A regenerated carrier used at this time is has a phase which is orthogonal to the phase of the carrier used for synchronous detection of the video signal. The output of the synchronous detection is the additional information, which is converted to its original data string by a decoder depending on the coding at the transmission side. If the coding at the transmission side is, for example, partial response, remainder operation is performed in the decoder, which is a known art and is not explained herein.

In the quadrature modulation system, however, mutual crosstalk may occur between the additional information and video information transmitted in quadrature due to deterioration of transmission path characteristic such as ghost and fading. As a result, an error would be formed in the reproduced data. To eliminate the crosstalk, for example, the same data is transmitted twice by inverting the polarity of amplitude at horizontal scanning intervals of the video signal at the transmission side, and the crosstalk is eliminated at the reception side by delaying the received signal for the horizontal scanning period and subtracting the delayed signal from the current received signal. In this method, nevertheless, if the video signals in adjacent two horizontal scanning periods are not the same, that is, if correlation does not exist, the crosstalk cannot be removed sufficiently by subtraction.

Another conventional example of digital data transmission system relating to the invention is disclosed by A. G. Mason, J. J. Gledhill and B. Tait, in "SPECTRE - Digital Television to UK Homes in the Existing UHF TV Band," NAB 1991 Broadcast Engineering Conference Proceedings, pp. 359, 1991. The transmission side is explained in the first place. For example, a data having a sound signal converted into a PCM digital data is fed into a data aligner. In the data aligner, the input data is converted from the serial data string to parallel data string, or processed by interleaving, etc. As required, moreover, an error correction code is added. The output signal of the data aligner in frequency domain is fed into an inverse Fourier transformer, and transformed into a signal in time domain. The transformed signal is converted into an analog signal by a D/A converter, and is fed into a filter. In the filter, spectrum shaping is executed as required. The filter output is fed into a frequency converter to be converted into a frequency band for transmission, and is transmitted through an antenna.

The processing at the reception side is as follows. The signal from an antenna is fed into a frequency converter to be converted in frequency to a specific band. The output of the frequency converter is converted into a digital signal by an A/D converter. This digital signal in time domain is transformed into a signal in frequency domain by a fast Fourier transformer (FFT), and the data in frequency domain set at the transmission side is extracted. The extracted data is converted from parallel string to serial string, reversely to the processing at the transmission side, by an inverse data aligner, and processed by deinterleaving, etc. As required, error correction is processed. The output of the inverse data aligner is sent out from the data string output terminal.

The frequency spectrum of the signal sent out from the antenna by the processing at the transmission side is explained below. A transmission signal is composed of multiple carriers within the transmission band, and possesses a uniform electric power spectrum. The wave to be modulated corresponding to each transmission symbol data has the spectrum configuration possessing orthogonal relation mutually in the frequency domain.

In this modulation system using multiple carriers, however, when transmitted by multiplexing with the television signal simply within the existing television broadcasting band, a crosstalk occurs between the television signal and the signal transmitted in this modulation system, and interferences would be brought about mutually. By lowering the amplitude of the signal transmitted in this modulation system, interferences on the existing television signal are decreased, but the crosstalk from the television signal becomes larger, and errors in reproduced data increase.

The conventional quadrature modulation system is all right in the normal transmission condition, but if there is ghost or the like in the transmission path, mutual crosstalk interferences occur between the demodulated video signal and additional information. In the modulation system using multiple carriers, it is, in principle, resistant to ghost trouble, but if simply multiplexed in the band, mutual interference with the existing television broadcast will be induced.

### SUMMARY OF THE INVENTION

It is hence a primary object of the invention to present a television signal processing apparatus capable of multiplexing and transmitting an additional signal without impeding the television signal within the transmission band of the existing television broadcasting, and reproducing the additional information without error, regardless of presence or absence of ghost.

To achieve the object, a television signal processing apparatus at the transmission side of the invention assigns a data string in the frequency domain, adjusts the amplitude of the signal in the frequency domain, and converts the amplitude-adjusted signal to a signal in the time domain. This apparatus possesses the function of multiplexing and transmitting the converted signal by quadrature modulation of video carrier. A television signal processing apparatus at the reception side possesses the functions of restoring the signal modulated in quadrature by quadrature demodulation, processing the demodulated multiplex signal to convert it into a signal in the frequency domain, and data conversion.

In this constitution, since the data string is assigned in the frequency domain, and then converted into the time domain, it is changed into a signal as if multiple carriers were modulated equivalently, excellent in efficiency of use of spectrum. The signal after adjustment of the amplitude in the frequency domain is converted into a signal in the time domain, and multiplexed and transmitted in quadrature modulation of video carrier, so that it can be transmitted without influences on the television signal. In addition, by quadrature demodulation, conversion into a signal in the frequency domain, and data conversion, the original data string can be demodulated regardless of presence or absence of ghost.

### BRIEF DESCRIPTION OF THE DRAWINGS

Fig. 1 is a block diagram showing an example of television signal processing apparatus at transmission side of the invention.

Fig. 2 is a diagram showing an example of spectrum of signal generated in the television signal processing apparatus at transmission side.

Fig. 3 is a block diagram showing an example of data aligner of the television signal processing apparatus at transmission side.

Fig. 4 (a) is a spectrum diagram showing an example of additional information transmitted in quadrature modulation in the invention.

Fig. 4 (b) is a spectrum diagram showing other example of additional information transmitted in quadrature modulation in the invention.

Fig. 5 (a) is a spectrum diagram in the video detection portion when received by an existing television receiver, showing an example of signal generated in the television signal processing apparatus at transmission side of the invention.

Fig. 5 (b) is a spectrum diagram in the video detection portion when received by an existing television receiver, showing other example of signal generated in the television signal processing apparatus at transmission side of the invention.

Fig. 6 is a block diagram showing an example of retransmission processing circuit in the television signal processing apparatus at transmission side.

Fig. 7 (a) is a diagram showing an example of waveform in a certain line by the retransmission processing circuit in the television signal processing apparatus at transmission side of the invention.

Fig. 7 (b) is a diagram showing an example of waveform in a next line by the retransmission processing circuit in the television signal processing apparatus at transmission side of the invention.

Fig. 8 is a block diagram showing an example of television signal processing apparatus at reception side of the invention.

Fig. 9 is a block diagram showing an example of operation circuit in the television signal processing apparatus at reception side.

Fig. 10 is a block diagram showing an example of an inverse data aligner in the television signal processing apparatus at reception side.

### DESCRIPTION OF THE PREFERRED EMBODIMENTS

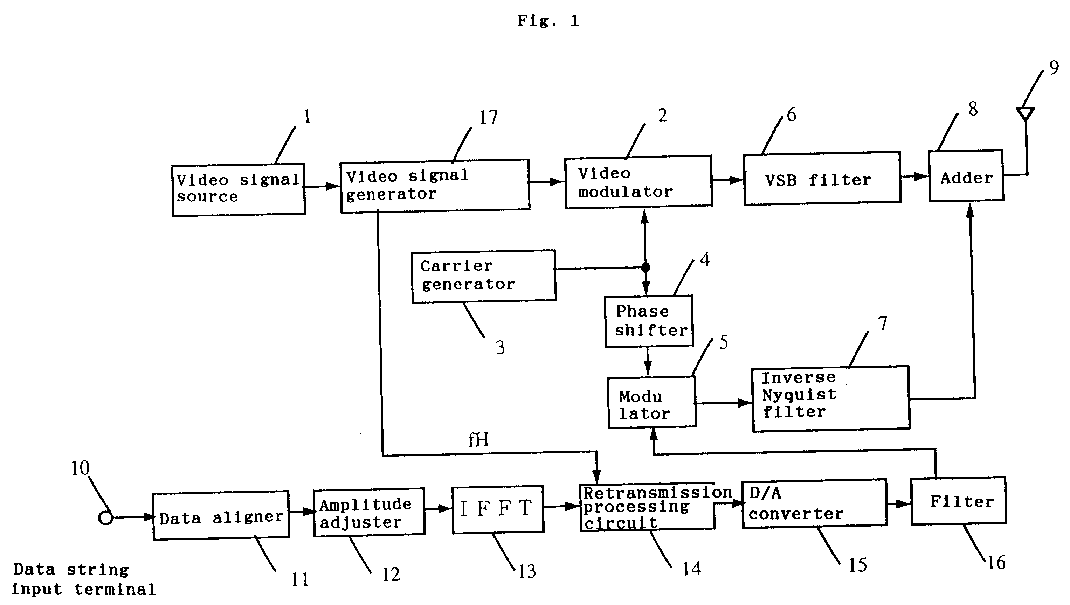

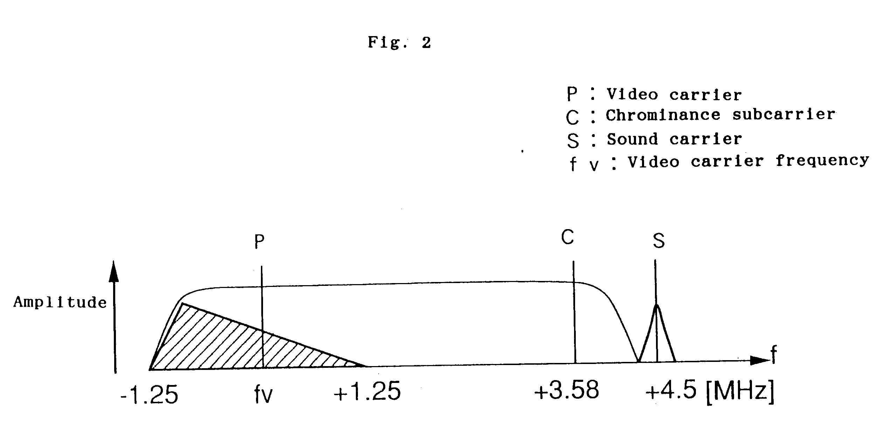

Fig. 1 is an example of block diagram showing a television signal processing apparatus at transmission side according to the invention. A signal from a video signal source 1 such as camera is processed by a video signal generator 17 to undergo the known chrominance signal processing or the like, and converted, for example, into video signal of NTSC system. The video signal from the video signal generator 17 is fed into a video modulator 2, and is amplitude-modulated by the video carrier from a carrier generator 3. The amplitude-modulated output of the video modulator 2 is fed into a vestigial side band (VSB) filter 6. In the VSB filter, the band is limited so as to settle within the transmission band, and the output is a signal in the vestigial side band. The output of the carrier generator 3 is fed into a phase shifter 4, and the phase of the carrier is shifted by π/2 (90 degrees). The output of the phase shifter 4 is fed into a modulator 5. On other hand, the data, for example, having the sound signal converted into PCM digital data is fed into a data aligner 11 through a data string input terminal 10. The data may be, for example, digital data from a compact disc, or data compressed by sound source coding. In the data aligner 11, as required, an error correction code is added to the input data, and interleaving or other processing is executed to convert from serial data string to parallel data string, and the data is assigned for amplitude in frequency domain and phase information. The output of the data aligner 11 corresponding to the signal in the frequency domain is fed into an amplitude adjuster 12. In the amplitude adjuster 12, the data in the frequency domain is weighted with amplitude (detail described below). It is easily realized by referring to ROM (read only memory) table or the like. The output of the amplitude adjuster 12 fed into an inverse fast Fourier transformer (IFFT) 13, and transformed into a signal in the time domain. For example, it is supposed to assign 100 pieces of binary data ("0" or "1") in 100 frequencies from fl to f1O0 in the frequency domain. If, for instance, the data is "0" for frequency f1, amplitude 1 and phase degree are assigned in the frequency domain, and if data is "1", amplitude 1 and phase 180 degrees are assigned. When this signal is transformed in the time domain by the IFFT, it becomes a sinusoidal wave at frequency f1. It corresponds to the bi-phase shift keying (BPSK) for changing the phase to 0 degree and 180 degrees depending on the data "0" and "1". When such processing is executed on 100 frequencies from f1 to f100, it becomes a gathering or synthesis of 100 carriers modulated by BPSK. Besides, weighting of each data with amplitude in the frequency domain by the amplitude adjuster 12 corresponds to changing of the amplitude of the signal converted in the time domain. The modulated transmission carriers are in the spectrum configuration mutually possessing the relation of quadrature in the frequency domain. As the phase information, for example, when 0 degree, 90 degrees, 180 degrees, and 270 degrees are assigned, each carrier corresponds to the QPSK modulation. It may be also a multi-value modulation such as 16QAM (hexadecimal quadrature amplitude modulation). The output of the IFFT 13 is fed into a retransmission processing circuit 14. In the retransmission processing circuit 14, synchronizing, for example, with the video signal, the same waveform as the waveform in a certain horizontal scanning period is sent out by inverting polarity of the waveform in the next horizontal scanning period. The data rate at this time is half of the original. Reproduction processing may not be always required. The output of the retransmission processing circuit 14 is converted into an analog signal in a D/A converter 15, and is fed into a filter 16. In the filter, the spectrum is shaped as required depending on the roll-off characteristic, high frequency range compensation or the like. The output of the filter 16 is fed into the modulator 5, and the carrier which is the output of the phase shifter 4 is modulated. The output of the modulator 5 is limited in band by an inverse Nyquist filter 7, and is combined with the output of the VSB filter 6 in an adder 8. The output of the adder 8 is sent out through an antenna 9. An example of the frequency amplitude characteristics of the inverse Nyquist filter (shaded area) and an example of spectrum of luminance signal and chrominance signal are shown in Fig. 2. The inverse Nyquist filter characteristic is a paradoxically symmetric amplitude frequency characteristic regarding the carrier, as compared with the Nyquist filter used in the detection stage of ordinary television receiver. In the diagram, P refers to video carrier, C to chrominance subcarrier, S to sound carrier, and fv to frequency of video carrier.

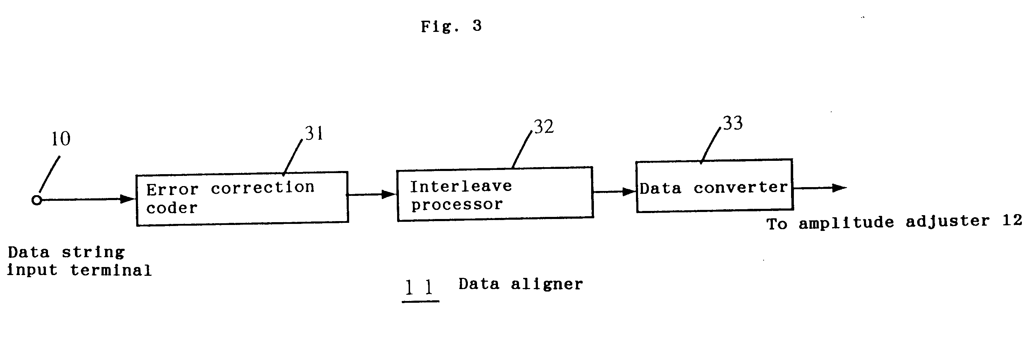

Fig. 3 is a block diagram showing an example of internal structure of the data aligner. A code of error correction is attached to the data entered through the data string input terminal 10 by an error correction coder 31. Next, in an interleave processor 32, interleave processing is performed by using memory or the like. These processings can be realized by the known art. In a data converter 33, consequently, the data is converted from serial to parallel string, and the data string is assigned to the amplitude information and phase information in the frequency region used in inverse Fourier transform. It may be easily realized by using a read only memory (ROM) or the like.

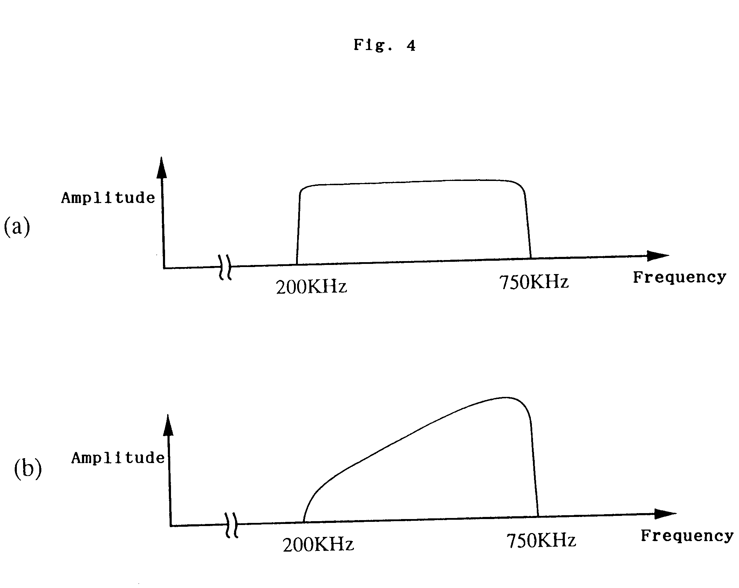

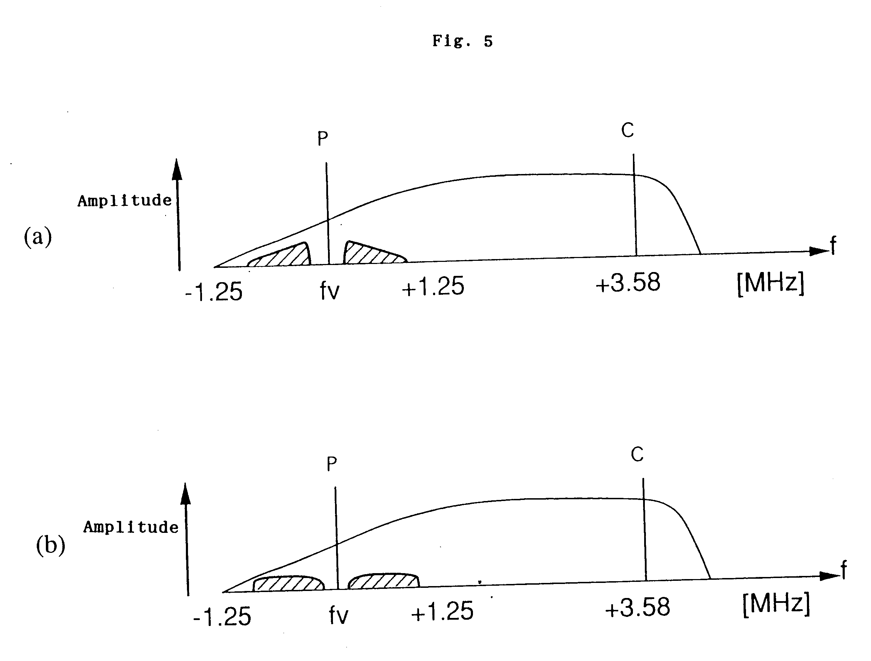

The function of the amplitude adjuster 12 is described below. The wave spectrum to be modulated may possess a uniform spectrum, for example, between 200 kHz and 750 kHz as shown in Fig. 4 (a), but the amplitude may well be adjusted. For amplitude adjustment, considering the interference to the existing receiver, it may be controlled by the amplitude adjuster 12 to increase the amplitude as the frequency becomes higher as shown in Fig. 4 (b). The data larger in amplitude is stronger in resistance to disturbance such as noise in respect to error, and the data may have priority by assigning important information in the frequency with larger amplitude. Fig. 5 shows the spectrum in the detection stage when received by the existing television receiver. Fig. 5 (a) is a case of receiving the signal sent out through the antenna 9 after quadrature modulation.of the signal shown in Fig. 4 (a) by the modulator 5. In the diagram, fv denotes the video carrier. The quadrature multiplexed signal (shaded area) is larger in the amplitude in the portion of lower frequency closer to the video carrier as shown in Fig. 5 (a). When this multiplex signal induces a crosstalk on the video signal, the low frequency components larger in amplitude are obvious, and interference to the picture increases. On the other hand, Fig. 5 (b) is a case of receiving the signal sent out through the antenna 9 after quadrature modulation of the signal shown in Fig. 4 (b) by the modulator 5, by the existing television receiver. As shown in Fig. 4 (b), the signal multiplexed in quadrature is small in the amplitude of the low frequency components, and the spectrum in the detection stage possesses a uniform amplitude as shown in Fig. 5 (b). Therefore, it becomes like white noise, and interference to the existing receiver may be visually lessened. Incidentally, when low frequency components less than about 200 kHz are multiplexed in quadrature modulation, the reproduced sound of the existing television is likely to be disturbed, and multiplexing of such frequency components may be avoided in such cases. In the modulation by multiple carriers, such transmission band control may be easily realized.

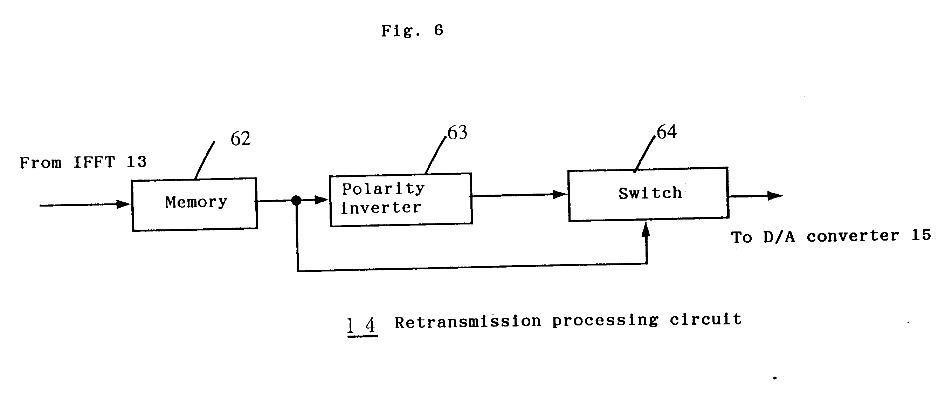

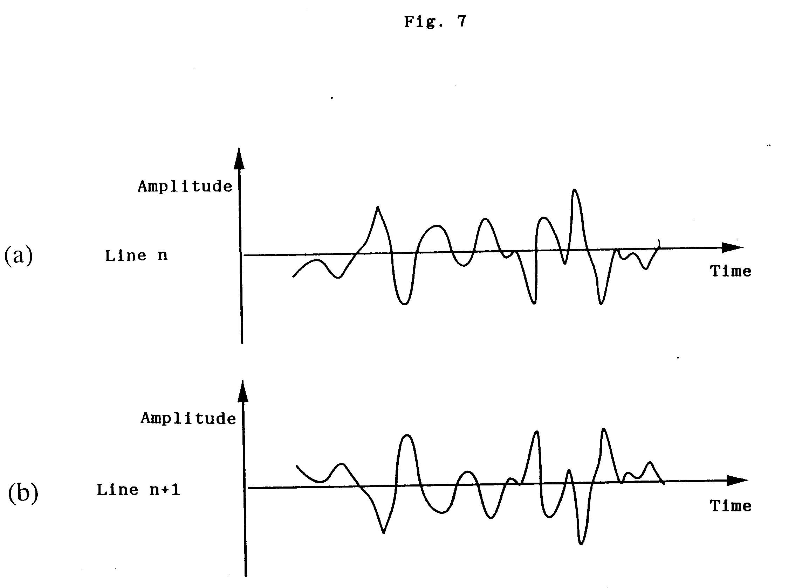

A block diagram of an example of internal constitution of retransmission processing circuit 14 is shown in Fig. 6. The signal from the IFFT 13 is fed into a memory 62. The output of the memory 62 delayed by a necessary time such as horizontal scanning period (1/fH) of video signal is inverted in the polarity of amplitude in a polarity inverter 63. The output of the polarity inverter 63 and the output of the memory 62 are changed over by a switch 64, and produced in the cycle of horizontal scanning period of video signal. The function of the retransmission processing circuit 14 is described below. Fig. 7 shows an example of waveform of converting the output of the retransmission processing circuit 14 into an analog signal. Fig. 7 (a) is an example of signal waveform on a certain line n (n being an integer) of television scanning lines. On the next line, n+1, as shown in Fig. 7 (b), a signal inverted in the polarity of the amplitude of line n is transmitted. As a result, the data transmission rate becomes half, but the crosstalk to the existing receiver is inverted in every line, so that it may be less obvious.

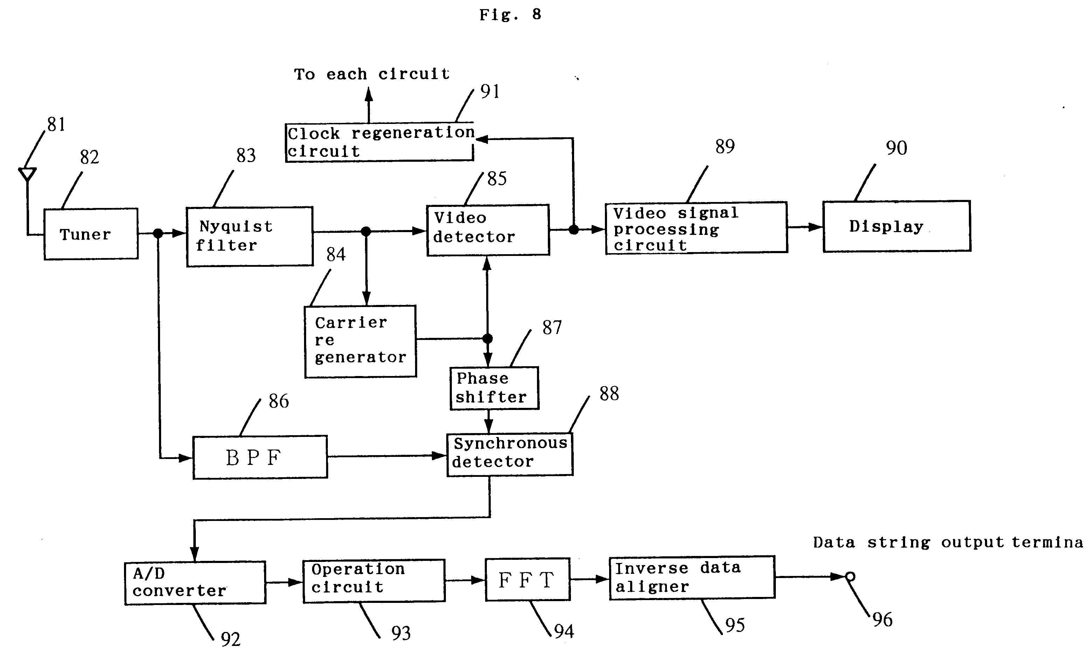

Fig. 8 is a block diagram showing a television signal processing apparatus at reception side according to the invention. A television signal coming in through an antenna 81 is converted in frequency to intermediate frequency for demodulation in a tuner 82. The output of the tuner 82 is limited in band by a Nyquist filter 83 possessing the known characteristics, and is fed into a video detector 85, and is synchronously detected by the reproduction carrier which is the output of a carrier regenerator 84, and a video signal of base band is obtained. In the carrier regenerator 84, a video carrier is reproduced from the output of the Nyquist filter 83. In a video signal processing circuit 89, the demodulated video signal of base band is processed in the known method reversely to the transmission side such as separation into luminance signal and chrominance signal, and, for example, three color signals of R, G, B are obtained, and shown in a display 90. In a clock regenerating circuit 91, a necessary clock is reproduced from the output of a video detector 85, and supplied to each circuit.

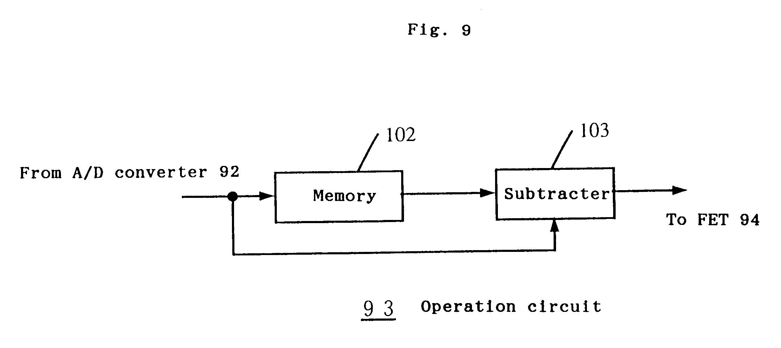

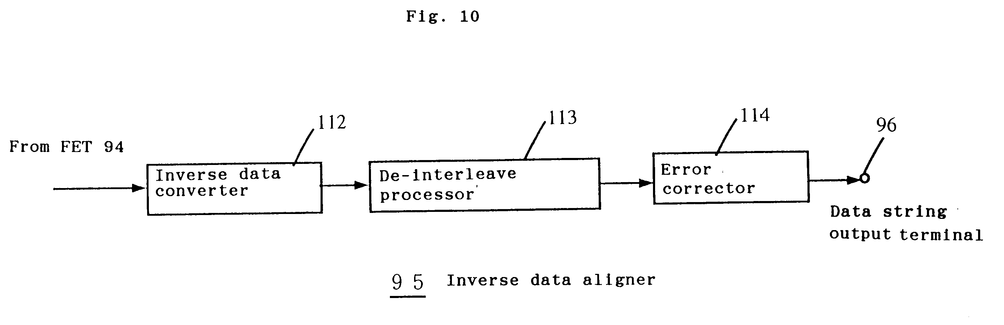

Furthermore, the following processing is done in order to demodulate the multiplexed additional information. The output of the tuner 82 is limited in band in a band pass filter 86 in order to eliminate effects of the video signal, and is fed into a synchronous detector 88. The carrier for detection of the synchronous detector 88 is the output of the carrier regenerator 84 shifted in phase by π/2 by a phase shifter 87. The output of the synchronous detector 88 becomes the additional information, and is converted into digital signal in an A/D (analog/digital) converter 92. This digital signal in the time domain is operated correspondingly to the retransmission processing at the transmission side, in an operation circuit 93. For example, when transmitted by data retransmission of polarity inversion of every line as shown in Fig. 7, the corresponding two lines are subtracted at the reception side. By this subtraction processing, it is also effective to reduce the random noise superposed on the data. An example of internal constitution of the operation circuit is shown in a block diagram in Fig. 9. The signal from the A/D converter 92 of the operation circuit 93 is delayed by a necessary time (for example, the horizontal scanning period of video signal) in a memory 102, and is subtracted from the input signal in a subtractor 103. The output of the operation circuit 93 is converted into a signal in the frequency domain by a fast Fourier transformer (FFT) 94, and the data corresponding to the frequency domain set at the transmission side is extracted. The extracted data is processed in an inverse data aligner 95 to undergo processing reverse to the transmission side, such as data conversion processing for assigning to binary data by amplitude and phase information, parallel/serial conversion, and de-interleaving. Besides, as required, error correction is processed. An example of internal constitution of the inverse data aligner 95 is shown in a block diagram in Fig. 10. The signal entered in the inverse data aligner 95 is the signal converted into a signal in the frequency domain by the FFT 94, and possesses amplitude information and phase information. By an inverse data converter 112, the reverse processing to the transmission side is executed, that is, the information is converted into binary data. It may be realized by using ROM or the like. Depending on the processing at the transmission side, the data is processed in a de-interleaving processor 113 and an error corrector 114. The output of the inverse data aligner 95 is sent out from the data string output terminal 96.

Since the data is transmitted by multiple carriers, the data transmission rate (or symbol rate) by individual carriers may be reduced. Therefore, it is less affected by ghost or the like with respect to error rate, and because of frequency interleaving, it is resistant to frequency selective fading, too. Moreover, by the clock generated on the basis of the video signal by the clock regeneration circuit 91, data extraction and other processing may be done stably.

The known arts such as processing of synchronous signal are omitted therein. The broadcasting system is not limited to the NTSC system alone. Instead of the antenna, the data may be transmitted through cables. The modulation method of the waves to be modulated is not limited to the QPSK alone, and it is evident that the same effects are brought about by n-value (n being an integer) PSK (phase shift keying), n-value QAM (quadrature amplitude modulation), and others.

## Claims

1. A television signal processing apparatus comprising:
assigning means for assigning plural data to signals in frequency domain;
amplitude adjusting means for adjusting amplitudes of the signals in the frequency domain;
time domain converting means for converting an output of the amplitude adjusting means to a signal in time domain;
time axis processing means for processing an output of the time domain converting means on a time axis;
a first filter for compensating an output of the time axis processing means in the frequency domain;
a video signal generator for generating a video signal;
first carrier generating means for generating a first carrier;
first modulation means for modulating an amplitude of the first carrier by the video signal from the video signal generator;
second carrier generating means for generating a second carrier orthogonal in phase to the first carrier;
second modulation means for modulating an amplitude of the second carrier by an output of the first filter;
a second filter for limiting a frequency band of an output of the first modulation means;
a third filter for limiting a frequency band of an output of the second modulation means; and
addition means for adding an output of the second filter and an output of the third filter.

2. A television signal processing apparatus of claim 1, wherein the time domain converting means comprises means for performing inverse fast Fourier transform of the output signal of the amplitude adjusting means.

3. A television signal processing apparatus of claim 1, wherein the amplitude adjusting means comprises means for increasing an amplitude in a portion corresponding to a high frequency range of the frequency domain.

4. A television signal processing apparatus of claim 1, wherein the time axis processing means comprises means for sending out a signal in a specific period and a signal inverted of polarity of the same signal alternately and repetitively.

5. A television signal processing apparatus comprising:
a first filter for limiting a frequency band of a quadrature modulated signal;
a second filter for limiting a frequency band of the quadrature modulated signal;
carrier regenerating means for regenerating a carrier from the quadrature modulated signal;
first synchronous detecting means for synchronous detecting an output of the first filter by the carrier from the carrier regenerating means;
phase control means for controlling a phase of the carrier from the carrier regenerating means to obtain another carrier;
second synchronous detecting means for synchronous detecting an output of the second filter by said another carrier from the phase control means;
operation processing means for operating an output of the second synchronous detecting means;
frequency domain converting means for converting an output of the operation processing means into a signal in frequency domain; and
data converting means for converting an output of the frequency domain converting means.

6. A television signal processing apparatus of claim 5, wherein the operation processing means comprises a retarder for delaying an output of an analog/digital converter by a specific time, and a subtractor for subtracting the output of the analog/digital converter from an output of the retarder.

7. A television signal processing apparatus of claim 5, wherein the frequency domain converting means comprises means for performing fast Fourier transform of the output of the operation processing means.

8. A television signal processing apparatus of claim 5, wherein the data converting means comprises means for shuffling the output of the frequency domain converting means to arrange in a specified configuration and sequence.

9. A television signal processing system comprising:
a television signal processing apparatus at transmission side comprising:
assigning means for assigning plural data to signals in frequency domain;
amplitude adjusting means for adjusting amplitudes of the signals in the frequency domain;
time domain converting means for converting an output of the amplitude adjusting means to a signal in time domain;
time axis processing means for processing an output of the time domain converting means on a time axis;
a first filter for compensating an output of the time axis processing means in the frequency domain;
a video signal generator for generating a video signal;
first carrier generating means for generating a first carrier;
first modulation means for modulating an amplitude of the first carrier by the video signal from the video signal generator;
second carrier generating means for generating a second carrier orthogonal in phase to the first carrier;
second modulation means for modulating an amplitude of the second carrier by an output of the first filter;
a second filter for limiting a frequency band of an output of the first modulation means;
a third filter for limiting a frequency band of an output of the second modulation means; and
addition means for adding an output of the second filter and an output of the third filter, and
a television signal processing apparatus at receiving side comprising:
a fourth filter for limiting a frequency band of a quadrature modulated signal;
a fifth filter for limiting a frequency band of the quadrature modulated signal;
carrier regenerating means for regenerating a carrier from the quadrature modulated signal;
first synchronous detecting means for synchronous detecting an output of the fourth filter by the carrier from the carrier regenerating means;
phase control means for controlling a phase of the carrier from the carrier regenerating means to obtain another carrier;
second synchronous detecting means for synchronous detecting an output of the fifth filter by said another carrier from the phase control means;
operation processing means for operating an output of the second synchronous detecting means;
frequency domain converting means for converting an output of the operation processing means into a signal in the frequency domain; and
data converting means for converting an output of the frequency domain converting means.

10. A television signal processing system of claim 9, wherein the time domain converting means comprises means for performing inverse fast Fourier transform of the output signal of the amplitude adjusting means.

11. A television signal processing system of claim 9, wherein the amplitude adjusting means comprises means for increasing an amplitude in a portion corresponding to a high frequency range of the frequency domain.

12. A television signal processing system of claim 9, wherein the time axis processing means comprises means for sending out a signal in a specific period and a signal inverted of polarity of the same signal alternately and repetitively.

13. A television signal processing system of claim 9, wherein the operation processing means comprises a retarder for delaying an output of an analog/digital converter by a specific time, and a subtractor for subtracting the output of the analog/digital converter from an output of the retarder.

14. A television signal processing system of claim 9, wherein the frequency domain converting means comprises means for performing fast Fourier transform of the output of the operation processing means.

15. A television signal processing system of claim 9, wherein the data converting means comprises means for shuffling the output of the frequency domain converting means to arrange in a specified configuration and sequence.
